**Europäisches Patentamt**

**European Patent Office**

**Office européen des brevets**

(11) Veröffentlichungsnummer: **0 359 116**
**A2**

# EUROPÄISCHE PATENTANMELDUNG

(21) Anmeldenummer: **89116511.0**

(22) Anmeldetag: **07.09.89**

(51) Int. Cl.5: **C08F 210/06 , C08F 2/34 , C08F 4/651**

(30) Priorität: **16.09.88 DE 3831483**

(43) Veröffentlichungstag der Anmeldung:
**21.03.90 Patentblatt 90/12**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Rau, Wolfgang, Dr.**
**Turnerstrasse 161**
**D-6900 Heidelberg(DE)**
Erfinder: **Zapf, Walter**
**Radolfstrasse 11**
**D-6710 Frankenthal(DE)**
Erfinder: **Zehner, Peter, Dr.**
**Erich-Kaestner-Strasse 15**
**D-6700 Ludwigshafen(DE)**

(54) **Verfahren zum Herstellen von Homopolymerisaten oder Copolymerisaten des Propylens.**

(57) Rahmen ist ein Verfahren zum Herstellen von Propylen-Homo- oder Copolymerisaten durch Polymerisation des zugrundeliegenden Monomer mittels eines Ziegler-Natta-Katalysatorsystems aus (1) einer durch Vermahlung gewonnenen feinteiligen, auf einem Cokristallisat der Formel $TiCl_3 \cdot 1/3 AlCl_3$ basierenden Titan-III-Komponente, (2) einer Aluminiumalkyl-Komponente, sowie (3) - gegebenenfalls - einer weiteren Cokatalysator-Komponente, in der Gasphase in einem Rührbett unter Abfuhr der Polymerisationswärme durch Verdampfungskühlung, wobei man das Monomer in einen Polymerisationskessel (P) einbringt und das Polymerisat aus (P) austrägt, mit den Maßgaben, daß man (a) in (P) den Druck und die Temperatur in einem Bereich hält, der dem gasförmigen Zustand des Monomers entspricht, (b) gasförmiges, nicht durch Polymerisation verbrauchtes Monomer aus (P) austrägt, das Monomer in einem Kondensator-Kühler-Speicher-System verflüssigt sowie speichert und in (P) wieder einbringt, (c) die Temperatur in dem Rührbett regelt durch Änderung der pro Zeiteinheit eingebrachten Menge an flüssigem, in (P) verdampfenden Monomer, und (d) das verbrauchte Monomer durch Frisch-Monomer ersetzt. Charakteristikum ist, daß man die Titan-III-Komponente (1) des Katalysatorsystems einsetzt in Form einer relativ nieder konzentrierten Suspension der Titan-III-Komponente in einem flüssigen Alkan, mit der Maßgabe, daß diese Suspension erhalten worden ist indem man zunächst eine sehr hoch konzentrierte Suspension der Titan-III-Komponente in dem Alkan über eine gewisse Zeitspanne kräftig rührt und dann mit weiterem Alkan auf die niedrigere Konzentration verdünnt.

EP 0 359 116 A2

## Verfahren zum Herstellen von Homopolymerisaten oder Copolymerisaten des Propylens

Die Erfindung liegt im Rahmen eines Verfahrens zum Herstellen von Propylen-Homopolymerisaten oder Propylen-Copolymerisaten, die mehr als 50, insbesondere mehr als 80 Gew.% Propylen sowie weniger als 50, insbesondere weniger als 20 Gew.% anderer, 2 bis 8, insbesondere 2 bis 6 Kohlenstoffatome aufweisender α-Monoolefine einpolymerisiert enthalten, durch Polymerisation des bzw. der zugrundeliegenden Monomeren - d.h. des entsprechenden "Monomer" - ,gegebenenfalls in Anwesenheit von Wasserstoff als Molekulargewichtsregler, mittels eines Ziegler-Natta-Katalysatorsystems aus

(1) einer durch vermahlung gewonnenen feinteiligen, auf einem Cokristallisat der Formel Ticl₃ • 1 3Alcl₃ basierenden Titan-III-Komponente,

(2) einer Aluminiumalkyl-Komponente, sowie

(3) - gegebenenfalls - einer weiteren Cokatalysator-Komponente, bei Temperaturen von 40 bis 150, insbesondere 50 bis 110°C und Gesamtdrücken von 10 bis 50, insbesondere 15 bis 40 bar in der Gasphase in einem zentrischen Rührbett aus kleinteiligem Polymerisat unter Abfuhr der Polymerisationswärme durch Verdampfungskühlung, wobei man das Monomer kontinuierlich oder taktweise in einen Polymerisationskessel einbringt und das Polymerisat kontinuierlich oder taktweise aus dem Polymerisationskessel austrägt, mit den Maßgaben, daß man

(a) in dem Polymerisationskessel den Druck und die Temperatur in einem Bereich hält, der dem gasförmigen Zustand des Monomer entspricht,

(b) gasförmiges, nicht durch Polymerisation verbrauchtes Monomer aus dem Polymerisationskessel austrägt, das Monomer in einem Kondensator-Kühler-Speicher-System verflüssigt sowie speichert und flüssig in den Polymerisationskessel wieder einbringt,

(c) die Temperatur in dem Rührbett regelt durch fortlaufende Messung der Temperatur und eine bei Temperaturänderung mittels eines Regelventils ausgelöste Änderung der pro Zeiteinheit eingebrachten Menge an flüssigem, in dem Polymerisationskessel verdampfenden Monomer, und

(d) das durch Polymerisation verbrauchte - sowie gegebenenfalls das mit dem Polymerisat ausgetragene - Monomer durch Zufuhr von Frisch-Monomer ersetzt, sowie - gegebenenfalls - den zur Aufrechterhaltung der gewünschten Konzentration erforderlichen Wasserstoff ergänzt.

Verfahren dieser Art sind bekannt und lassen sich in der Praxis mit gutem Erfolg durchführen.

Im gegebenen Zusammenhang ist insbesondere auf das aus der US-PS 4 012 573 sowie auch der US-PS 4 330 645 und der US-PS 4 442 271 bekannte Verfahren hinzuweisen; es kann im wesentlichen als Basis für das erfindungsgemäße Verfahren angesehen werden.

Diesem lag die Aufgabe zugrunde, das bekannte Verfahrenn so weiter auszugestalten, daß es mit noch besserem Erfolg durchgeführt werden kann. Wesentliche Zielsetzung hierbei war u.a. die Verbesserung der Dosierbarkeit der Titan-III-Komponente (1) des Katalysatorsystems, ohne zugleich eine Erhöhung des Anteils an unerwünscht feinteiligem Polymerisat in Kauf nehmen zu müssen.

Es wurde gefunden, daß die gestellte Aufgabe gelöst werden kann, wenn das eingangs definierte Verfahren derart ausgestaltet wird, daß man die Titan-III-Komponente (1) des Katalysatorsystems einsetzt in Form einer relativ nieder konzentrierten Suspension der Titan-III-Komponente in einem flüssigen Alkan, mit der Maßgabe, daß diese Suspension erhalten worden ist indem man zunächst eine sehr hoch konzentrierte Suspension der Titan-III-Komponente in dem Alkan über eine gewisse Zeitspanne kräftig rührt und dann mit weiterem Alkan auf die niedrigere Konzentration verdünnt.

Gegenstand der Erfindung ist somit ein Verfahren zum Herstellen von Propylen-Homopolymerisaten oder Propylen-Copolymerisaten, die mehr als 50, insbesondere mehr als 80 Gew.% Propylen sowie weniger als 50, insbesondere weniger als 20 Gew.% anderer, 2 bis 8, insbesondere 2 bis 6 Kohlenstoffatome aufweisender α-Monoolefine einpolymerisiert enthalten, durch Polymerisation des bzw. der zugrundeliegenden Monomeren - d.h. des entsprechenden "Monomer" - ,gegebenenfalls in Anwesenheit von Wasserstoff als Molekulargewichtsregler, mittels eines Ziegler-Natta-Katalysatorsystems aus

(1) einer durch Vermahlung gewonnenen feinteiligen, auf einem Cokristallisat der Formel TiCl₃ • 1/3Alcl₃ basierenden Titan-III-Komponente,

(2) einer Aluminiumalkyl-Komponente, sowie

(3) - gegebenenfalls - einer weiteren anderen Cokatalysator-Komponente, bei Temperaturen von 40 bis 150, insbesondere 50 bis 110°C und Gesamtdrücken von 10 bis 50, insbesondere 15 bis 40 bar in der Gasphase in einem zentrischen Rührbett aus kleinteiligem Polymerisat unter Abfuhr der Polymerisationswärme durch Verdampfungskühlung, wobei man das Monomer kontinuierlich oder taktweise in einen Polymerisationskessel einbringt und das Polymerisat kontinuierlich oder taktweise aus dem Polymerisationskessel austrägt, mit den Maßgaben, daß man

(a) in dem Polymerisationskessel den Druck und die Temperatur in einem Bereich hält, der dem gasförmigen Zustand des Monomer entspricht,

(b) gasförmiges, nicht durch Polymerisation verbrauchtes Monomer aus dem Polymerisationskessel austrägt, das Monomer in einem Kondensator-Kühler-Speicher-System verflüssigt sowie speichert und flüssig in den Polymerisationskessel wieder einbringt,

(c) die Temperatur in dem Rührbett regelt durch fortlaufende Messung der Temperatur und eine bei Temperaturänderung mittels eines Regelventils ausgelöste Änderung der pro Zeiteinheit eingebrachten Menge an flüssigem, in dem Polymerisationskessel verdampfenden Monomer, und

(d) das durch Polymerisation verbrauchte - sowie gegebenenfalls das mit dem Polymerisat ausgetragene - Monomer durch Zufuhr von Frisch-Monomer ersetzt, sowie - gegebenenfalls - den zur Aufrechterhaltung der gewünschten Konzentration erforderlichen Wasserstoff ergänzt.

Das erfindungsgemäße Verfahren ist dadurch gekennzeichnet, daß man die Titan-III-Komponente (1) des Katalysatorsystems einsetzt in Form einer Suspension von 100 Gewichtsteilen der Titan-III-Komponente in 250 bis 1000, vorzugsweise 350 bis 750 Gewichtsteilen eines - einschlägig üblichen - flüssigen Alkans, mit der Maßgabe, daß diese Suspension erhalten worden ist indem man zunächst eine Suspension von 100 Gewichtsteilen der Titan-III-Komponente in 15 bis 100, vorzugsweise 25 bis 70 Gewichtsteilen des Alkans über eine Zeitspanne von 1 bis 10, vorzugsweise 3 bis 7 Stunden kräftig rührt und dann mit weiterem Alkan auf die angegebene niedrigere Konzentration verdünnt.

Zu dem erfindungsgemäßen Verfahren ist im einzelnen das Folgende zu sagen:

A) Stoffliche Seite

Das zu polymerisierende Monomer kann das einschlägig übliche sein, also z.B. Propylen allein oder ein Gemisch aus Propylen mit einem oder mehreren anderen $C_2$- bis $C_8$-$\alpha$-Monoolefinen, wie Äthylen, n-Buten-1, n-Hexen-1, n-Octen-1 oder 4-Methylpenten-1. Wie sich gezeigt hat, eignet sich das erfindungsgemäße Verfahren besonders gut zum Herstellen von Propylen-Homopolymerisaten, binären Copolymerisaten aus Propylen und Äthylen sowie ternären Copolymerisaten aus Propylen, Äthylen und n-Buten-1 oder anderen höheren $\alpha$-Monoolefinen. Die Polymerisate fallen in kleinteiliger Form als feinerer oder gröberer Grieß an, wobei die Teilchengröße - nicht anders als bei den einschlägig bekannten Verfahren - von den im einzelnen gewählten Verfahrensbedingungen abhängt. Es läßt sich somit sagen, daß der Teilchendurchmesser der Polymerisate im allgemeinen im Bereich von etwa 0,03 bis 10 und insbesondere etwa 0,1 bis 5 mm liegt.

Die Polymerisation selbst erfolgt mittels eines Katalysatorsystems aus

(1) einer durch Vermahlung gewonnenen feinteiligen, auf einem Cokristallisat der Formel $TiCl_3 \cdot 1/3 AlCl_3$ basierenden Titan-III-Komponente,

(2) einer Aluminiumalkyl-Komponente, sowie

(3) - gegebenenfalls - einer weiteren Cokatalysator-Komponente.

Ziegler-Natta-Katalysatorsysteme dieser Art sind wohlbekannt; bei ihrer Titan-III-Komponente (1) handelt es sich im allgemeinen um ein mit Elektronendonatoren bzw. Lewis-Basen modifiziertes Cokristallisat der bezeichneten Art. Derartige Katalysator-Komponenten (1) gibt es in zahlreichen Varianten, da sie bekanntlich eine Reihe von Vorteilen mit sich bringen.

Um unnötige Wiederholungen zu vermeiden sei an dieser Stelle auf eine detaillierte Beschreibung der für den erfindungsgemäßen Zweck geeigneten Ziegler-Natta-Katalysatorsysteme verzichtet; sie sollen statt dessen auf dem Wege des Zitats zum Bestandteil der Offenbarung der vorliegenden Erfindung gemacht werden, - wozu insbesondere genannt werden die US-PSen 3 937 691, 3 977 997, 4 120 823, 4 154 699, 4 154 700 und 4 229 318.

Insgesamt läßt sich somit sagen, daß die stoffliche Seite des erfindungsgemäßen Verfahrens insoweit als solche im Rahmen des einschlägig üblichen liegt.

Innerhalb dieses bekannten Rahmens besteht die für die vorliegende Erfindung kennzeichnende Neuheit darin, daß man die Titan-III-Komponente (1) des Katalysatorsystems einsetzt in Form einer Suspension von 100 Gewichtsteilen der Titan-III-Komponente in 250 bis 1000, vorzugsweise 350 bis 750 Gewichtsteilen eines - einschlägig üblichen - flüssigen Alkans, wie n-Heptan, mit der Maßgabe, daß diese Suspension erhalten worden ist indem man zunächst eine Suspension von 100 Gewichtsteilen der Titan-III-Komponente in 15 bis 100, vorzugsweise 25 bis 70 Gewichtsteilen des Alkans über eine Zeitspanne von 1 bis 10, vorzugsweise 3 bis 7 Stunden kräftig rührt und dann mit weiterem Alkan auf die angegebene niedrigere Konzentration verdünnt.

B) Verfahrenstechnische Seite

Sie hat ihren tiefsten Ursprung in den Techniken zum Herstellen von Homo- oder Copolymerisaten des Propylens in der Gasphase wie sie bekannt geworden sind z.B. aus den GB-PS 837 301, 1 006 469 und 1 032 945. Die Prinzipien dieser Techniken sind unbeschadet ihres Alters sinngemäß voll beim erfindungsgemäßen Verfahren anwendbar; - womit sich insoweit nähere Ausführungen erübrigen. In seinem spezielleren Aspekt basiert das erfindungsgemäße Verfahren - wie eingangs bereit dargelegt - im wesentlichen auf dem aus den US-PSen 4 012 573, 4 330 645 sowie 4 442 271 bekannten Verfahren; es bedarf daher auch insoweit keiner besonderer Erläuterungen.

Indes ist zu dem kennzeichnenden Merkmal des erfindungsgemäßen Verfahrens das folgende zu sagen:

Es besteht dem Wesen nach darin, daß man die Titan-III-Komponente (1) des Katalysatorsystems einsetzt in Form einer relativ nieder konzentrierten Suspension der Titan-III-Komponente in einem flüssigen Alkan, mit der Maßgabe, daß diese Suspension erhalten worden ist indem man zunächst eine sehr hoch konzentrierte Suspension der Titan-III-Komponente in dem Alkan über eine gewisse Zeitspanne kräftig rührt und dann mit weiterem Alkan auf die niedrigere Konzentration verdünnt.

Die hierfür erforderlichen Maßnahmen sind vom Fachmann ohne weiteres zu vollziehen, zumal die dafür nötigen Vorrichtungen zum gängigen technischen Standard zählen. Letzteres gilt auch für die Vorrichtung zum Rühren und Verdünnen der hoch konzentrierten Suspension der Titan-III-Komponente, welches z.B in einem einschlägig üblichen Katalysatoransetzbehälter erfolgen kann, insbesondere einen solchen mit Balkenrührer.

Beispiel

Es wird gearbeitet mit einem einschlägig üblichen, mit einem Rührer versehenen Polymerisationskessel, der ein Nutzvolumen von 12,5 m³ hat.

In dem Reaktor wird ein Propylen-Homopolymerisat hergestellt durch Polymerisation von Propylen in Anwesenheit von Wasserstoff mittels eines Ziegler-Natta-Katalysatorsystems bei einer Temperatur von 77° C und einem Propylen-Druck von 25 bar sowie einem Wasserstoff-Druck von 0,1 bar in der Gasphase in einem zentrischen Rührbett aus kleinteiligem, einen Teilchendurchmesser von 0,2 bis 4 mm aufweisenden Polymerisat.

Das verwendete Ziegler-Natta-Katalysatorsystem besteht aus (1) einer Titan-III-Komponente, die - in ihrer primären Form - gemäß Beispiel 3 der US-PS 4 154 699 hergestellt worden ist (jedoch nicht mit 4-Phenylbuttersäureethylester sondern statt dessen mit der gleichen molaren Menge Benzoesäure-n-propylester) sowie (2) einer Aluminiumalkyl-Komponente, namentlich Diäthylaluminiumchlorid. Diese Katalysator-Komponenten werden getrennt voneinander in die Polymerisationszone eingebracht, und zwar 300 g/h der Komponente (1) sowie 800 g/h der Komponente (2); - was einem Molverhältnis Ti aus (1) : Al aus (2) von näherungsweise 1:5 entspricht.

Im einzelnen wird dabei erfindungsgemäß so verfahren, daß man die Titan-III-Komponente (1) des Katalysatorsystems einsetzt in Form einer Suspension von 100 Gewichtsteilen der Titan-III-Komponente in 400 Gewichtsteilen n-Heptan, mit der Maßgabe, daß diese Suspension erhalten worden ist indem man zunächst eine Suspension von 100 Gewichtsteilen der - primären - Titan-III-Komponente in 35 Gewichtsteilen n-Heptan über eine Zeitspanne von 5 Stunden kräftig rührt und dann mit weiterem n-Heptan auf die oben angegebene niedrigere Konzentration verdünnt.

Die weiteren Rahmenbedingungen sind gemäß der US-PS 4 012 573 so gewählt, daß die Abfuhr der Polymerisationswärme durch Verdampfungskühlung erfolgt, wobei man das Monomer im Gemisch mit Wasserstoff (insgesamt 8200 kg/h) kontinuierlich in den Polymerisationskessel einbringt und das Polymerisat taktweise aus dem Polymerisationskessel austrägt, mit den Maßgaben, daß man

(a) in dem Polymerisationskessel den Druck und die Temperatur in einem Bereich hält, der dem gasförmigen Zustand des Monomer entspricht (was durch die o.g. Bedingungen erfüllt ist),

(b) gasförmiges, nicht durch Polymerisation verbrauchtes Monomer (im Gemisch mit Wasserstoff) aus dem Polymerisationskessel austrägt, das Monomer in einem Kondensator-Kühler-Speicher-System verflüssigt sowie speichert und flüssig in den Polymerisationskessel wieder einbringt,

(c) die Temperatur in dem Rührbett regelt durch fortlaufende Messung der Temperatur und eine bei Temperaturänderung mittels eines Regelventils ausgelöste Änderung der pro Zeiteinheit eingebrachten Menge an flüssigem, in dem Polymerisationskessel verdampfenden Monomer, und

(d) das durch Polymerisation verbrauchte sowie das mit dem Polymerisat ausgetragene Monomer durch Zufuhr von Frisch-Monomer ersetzt, sowie den zur Aufrechterhaltung der gewünschten Konzentration erforderlichen Wasserstoff ergänzt.

Auf diese Weise läßt sich das Polymerisationsverfahren nicht nur über eine längere Zeitspanne ohne Störung betreiben, es ergeben sich auch keine Schwierigkeiten beim Dosieren der Titan-III-Komponente, zudem enthält das Polymerisat keinen erhöhten Anteil an - unerwünschtem - Feinstkorn.

**Ansprüche**

1. Verfahren zum Herstellen von Propylen-Homopolymerisaten oder Propylen-Copolymerisaten, die mehr als 50 Gew.% Propylen sowie weniger als 50 Gew.% anderer, 2 bis 8 Kohlenstoffatome aufweisender α-Monoolefine einpolymerisiert enthalten, durch Polymerisation des bzw. der zugrundeliegenden Monomeren - d.h. des entsprechenden "Monomer" -, mittels eines Ziegler-Natta-Katalysatorsystems aus

(1) einer durch Vermahlung gewonnenen feinteiligen, auf einem Cokristallisat der Formel $TiCl_3 \cdot 1,3AlCl_3$ basierenden Titan-III-Komponente,

(2) einer Aluminiumalkyl-Komponente, sowie

(3) - gewünschtenfalls - einer weiteren Cokatalysator-Komponente, bei Temperaturen von 40 bis 150°C und Gesamtdrücken von 10 bis 50 bar in der Gasphase in einem zentrischen Rührbett aus kleinteiligem Polymerisat unter Abfuhr der Polymerisationswärme durch Verdampfungskühlung, wobei man das Monomer kontinuierlich oder taktweise in einen Polymerisationskessel einbringt und das Polymerisat kontinuierlich oder taktweise aus dem Polymerisationskessel austrägt, mit den Maßgaben, daß man

(a) in dem Polymerisationskessel den Druck und die Temperatur in einem Bereich hält, der dem gasförmigen Zustand des Monomer entspricht,

(b) gasförmiges, nicht durch Polymerisation verbrauchtes Monomer aus dem Polymerisationskessel austrägt, das Monomer in einem Kondensator-Kühler-Speicher-System verflüssigt sowie speichert und flüssig in den Polymerisationskessel wieder einbringt,

(c) die Temperatur in dem Rührbett regelt durch fortlaufende Messung der Temperatur und eine bei Temperaturänderung mittels eines Regelventils ausgelöste Änderung der pro Zeiteinheit eingebrachten Menge an flüssigem, in dem Polymerisationskessel verdampfenden Monomer, und

(d) das durch Polymerisation verbrauchte Monomer durch Zufuhr von Frisch-Monomer ersetzt, dadurch gekennzeichnet, daß man die Titan-III-Komponente (1) des Katalysatorsystems einsetzt in Form einer Suspension von 100 Gewichtsteilen der Titan-III-Komponente in 250 bis 1000 Gewichtsteilen eines flüssigen Alkans, mit der Maßgabe, daß diese Suspension erhalten worden ist indem man zunächst eine Suspension von 100 Gewichtsteilen der Titan-III-Komponente in 15 bis 100 Gewichtsteilen des Alkans über eine Zeitspanne von 1 bis 10 Stunden kräftig rührt und dann mit weiterem Alkan auf die angegebene niedrigere Konzentration verdünnt.

2. Verfahren nach Anspruch 1, dadurch gekennzeichnet, daß man in Anwesenheit von Wasserstoff als Molekulargewichtsregler arbeitet.

3. Verfahren nach Anspruch 1 oder 2, dadurch gekennzeichnet, daß man die Polymerisation bei Temperaturen von 50 bis 110°C ausführt.

4. Verfahren nach Anspruch 1 bis 3, dadurch gekennzeichnet, daß man die Polymerisation bei Gesamtdrücken von 15 bis 40 bar ausführt.

5. Verfahren nach Anspruch 1 bis 4, dadurch gekennzeichnet, daß man das mit dem Polymerisat ausgetragene Monomer durch Zufuhr von Frisch-Monomer ersetzt.

6. Verfahren nach Anspruch 1 bis 5, dadurch gekennzeichnet, daß man den zur Aufrechterhaltung der gewünschten Konzentrationen erforderlichen Wasserstoff ergänzt.

7. Verfahren nach Anspruch 1 bis 6, dadurch gekennzeichnet, daß man die Titan-III-Komponente des Katalysatorsystems einsetzt in Form einer Suspension von 100 Gew.-Teilen der Titan-III-Komponente in 350 bis 750 Gew.-Teilen eines flüssigen Alkans.